# EUROPÄISCHE PATENTSCHRIFT

(11) **EP 2 429 872 B1**
(45) Veröffentlichungstag und Bekanntmachung des Hinweises auf die Patenterteilung: **26.06.2013**
(21) Anmeldenummer: 10713171.6
(22) Anmeldetag: 01.04.2010
(51) Int. Cl.: B60W 30/06, B62D 15/02

(54) **VERFAHREN UND VORRICHTUNG ZUR EINPARKUNTERSTÜTZUNG EINES FAHRZEUGS**
METHOD AND DEVICE FOR PROVIDING ASSISTANCE FOR PARKING A VEHICLE
PROCÉDÉ ET DISPOSITIF D'ASSISTANCE AUX MANOEUVRES DE STATIONNEMENT D'UN VÉHICULE

(30) Priorität: 11.05.2009 DE 102009002974; 29.06.2009 DE 102009027289
(43) Veröffentlichungstag der Anmeldung: 21.03.2012
(73) Patentinhaber: Robert Bosch GmbH, 70442 Stuttgart (DE)
(72) Erfinder: SCHOENHERR, Michael, 70190 Stuttgart (DE); NIEMZ, Volker, 71277 Rutesheim (DE)
(86) Internationale Anmeldenummer: PCT/EP2010/054413
(87) Internationale Veröffentlichungsnummer: WO 2010/130505

(56) Entgegenhaltungen:
- EP-A2- 1 862 376
- WO-A1-2005/085043
- DE-A1-102005 037 468

## Beschreibung

Die vorliegende Erfindung betrifft ein Verfahren zur Einparkunterstützung eines Fahrzeuges gemäß dem Oberbegriff des Anspruch 1, wie aus der DE 10 2005 037 468 A1 bekannt. Des Weiteren betrifft die vorliegende Erfindung eine entsprechende Vorrichtung zur Einparkunterstützung eines Fahrzeuges sowie ein entsprechendes Computerprogrammprodukt.

Die EP 1 862 376 A2 beschreibt ein Verfahren zur Steuerung eines Einparkvorganges, wobei zur Unterstützung des Fahrers eine Anzeigeeinheit die Umgebung des Kraftfahrzeuges im Inneren des Kraftfahrzeuges darstellt. In dem Umgebungsbild wird eine Zielposition des Kraftfahrzeuges dargestellt, die sich in Abhängigkeit von Bedienaktionen des Fahrers verändert. Durch eine Auswahlaktion des Fahrers wird die veränderte Bildposition des Zielobjekts ausgewählt und eine entsprechend veränderte Zielposition für das Kraftfahrzeug als Sollposition des Einparkvorganges übernommen.

Die WO 2005/085043 A1 offenbart ein Verfahren zur Einparkunterstützung mit einem zweizügigen Einparkvorgang ohne Fahrtrichtungsänderung.

Die DE 199 40 007 A1 offenbart ein Verfahren und eine Vorrichtung zur Unterstützung des Einparkens eines Kraftfahrzeugs, bei dem eine Soll-Tajektorie vorgegeben wird, die eine von der Fahrzeugposition, dem Fahrzustand, den Umgebungsbedingungen und den Fahrzeugdaten abhängige Soll-Bahnkurve des einzuparkenden Fahrzeugs in eine Parklücke angibt. Die Soll-Trajektorie ist aus einem oder mehreren Klothoidbögen und/oder aus einem oder mehreren Kreisbögen zusammengesetzt. Beim Einparken des Fahrzeugs wird eine Ist-Trajektorie erfasst und mit der Soll-Trajektorie verglichen. Aus dem Vergleichsergebnis wird eine Stellgröße für einen Lenkstellmotor berechnet. Um zu vermeiden, dass die Lenkbeschleunigung und der Lenkruck zu hoch werden, wird die Stellgröße einer Filterung unterworfen, die abrupte Übergänge an den Flanken der Stellgröße glättet.

Die DE 10 2006 027 114 A1 offenbart ein Verfahren und ein Steuergerät zur Einparkunterstützung, bei dem Fahrhinweise an den Fahrer eines Fahrzeugs ermittelt werden, die wenigstens einen Befehl umfassen, eine Lenkung des Fahrzeugs im Stand durchzuführen. Die Lenkung im Stand ermöglicht, ohne hohe Lenkbeschleunigung oder einen hohen Lenkruck Einparkvorgänge auch entlang von Bahnkurven kurzer Streckenlänge zu unterstützen, bei denen sich der Krümmungsradius entlang der Bahnkurve sprungartig ändert.

### Offenbarung der Erfindung

Erfindungsgemäß vorgesehen ist ein Verfahren zur Unterstützung des Einparkens eines Fahrzeugs in eine Parklücke, wie in Anspruch 1 definiert. Zunächst werden Umgebungsdaten des Fahrzeugs erfasst. In einem weiteren Schritt wird basierend auf den Umgebungsdaten beurteilt, ob das Fahrzeug ohne Zwischenhalt in die Parklücke einparken kann. In dem Fall, dass beurteilt wurde, dass das Fahrzeug ohne Zwischenhalt in die Parklücke einparken kann, wird eine erste Bahnkurve zur Bewegung des Fahrzeugs ohne Zwischenhalt in die Parklücke ermittelt. Im umgekehrten Fall, dass beurteilt wurde, dass das Fahrzeug nicht ohne Zwischenhalt in die Parklücke einparken kann, wird eine erste Bahnkurve zur Bewegung des Fahrzeugs mit Zwischenhalt in die Parklücke ermittelt.

Auf diese Weise ermöglicht das Verfahren, in jeder Situation, wie sie mittels der Umgebungsdaten erfasst wird, das Fahrzeug mit dem in dieser Situation größtmöglichen Komfort in die Parklücke einparken zu lassen. Falls in einer gegebenen Situation, z.B. bei einer gegebenen Relativposition des Fahrzeugs zur Parklücke beurteilt wurde, dass das Fahrzeug ohne Zwischenhalt in die Parklücke eingeparkt werden kann, d.h. wenn eine Bahnkurve ohne sprungartige Änderungen des Krümmungsradius konstruierbar ist, entlang derer das Fahrzeug in die Parklücke geführt werden kann, wird gemäß dem Verfahren eine solche erste Bahnkurve ausgewählt. Im gegenteiligen Fall, wenn eine Bahnkurve, entlang derer das Fahrzeug in die Parklücke geführt werden kann, nur mit Zwischenhalt z.B. an einer Stelle, an der sich der Krümmungsradius der Bahnkurve sprungartig ändert, konstruierbar ist, wird gemäß dem Verfahren eine solche zweite Bahnkurve ausgewählt. Damit ist eine Einparkunterstützung auch in Fällen verfügbar, die die Ermittlung der ersten Bahnkurve ohne Zwischenhalt nicht erlauben.

Unter weiteren Gesichtspunkten schafft die Erfindung ein Computerprogrammprodukt zur Ausführung des Verfahrens gemäß Anspruch 5 und eine Vorrichtung zur Unterstützung des Einparkens eines Fahrzeugs in eine Parklücke gemäß Anspruch 6. Die Vorrichtung umfasst eine Datenschnittstelle zur Erfassung von Umgebungsdaten des Fahrzeugs, eine Beurteilungseinheit zur Beurteilung basierend auf den Umgebungsdaten, ob das Fahrzeug ohne Zwischenhalt in die Parklücke einparken kann, einen ersten Bahnkurvenermittler, der eine erste Bahnkurve zur Bewegung des Fahrzeugs ohne Zwischenhalt in die Parklücke ermittelt, wenn die Beurteilungseinheit beurteilt hat, dass das Kraftfahrzeug ohne Zwischenhalt in die Parklücke einparken kann, und einen zweiten Bahnkurvenermittler, der eine zweite Bahnkurve zur Bewegung des Kraftfahrzeugs mit mindestens einem Zwischenhalt in die Parklücke ermittelt, wenn die Beurteilungseinheit beurteilt hat, dass das Kraftfahrzeug nicht ohne Zwischenhalt in die Parklücke einparken kann.

Gemäß einer bevorzugten Weiterbildung umfassen die Umgebungsdaten mindestens eine Abmessung der Parklücke, eine relative Position des Fahrzeugs zur Parklücke oder/und eine Umgebungsverkehrsdichte. Dies ermöglicht, in Abhängigkeit eines oder mehrerer dieser Para meter eine Bahnkurve zu ermitteln, die in der gegebenen Situation den größtmöglichen Komfort bietet.

Erfindungsgemäß umfasst das Beurteilen einen Schritt des Ermittelns einer Ausgangsdistanz des Kraftfahrzeugs zur Parklücke, basierend auf den Umgebungsdaten, und einen Schritt des Vergleichens der Ausgangsdistanz mit einem ersten Schwellwert. Die Ausgangsdistanz kann z.B. als ein Abstand zwischen einem vorbestimmten Punkt der Parklücke und einem vorbestimmten Punkt des Fahrzeugs definiert sein, ggf. projiziert auf die Längsrichtung des Fahrzeugs. Dabei wird beurteilt, dass das Fahrzeug ohne Zwischenhalt in die Parklücke einparken kann, wenn die Ausgangsdistanz mindestens den ersten Schwellwert beträgt, und dass das Fahrzeug nicht ohne Zwischenhalt in die Parklücke einparken kann, wenn die Ausgangsdistanz weniger als den ersten Schwellwert beträgt. Mittels dieses Kriteriums erfolgt die Beurteilung, ob das Fahrzeug ohne Zwischenhalt einparken kann, besonders einfach.

Erfindungsgemäß ist weiterhin ein Schritt des Vergleichens der Ausgangsdistanz mit einem zweiten Schwellwert vorgesehen, wobei die zweite Bahnkurve mit mindestens zwei Zwischenhalten ermittelt wird, wenn die Ausgangsdistanz größer als der zweite Schwellwert ist. Dies erhöht die Verfügbarkeit noch weiter, da durch Verwendung zweier Zwischenhalte das Einparken auch dann noch unterstützt werden kann, wenn die Ausgangsdistanz zur Parklücke zu klein ist, um das Fahrzeug mit nur einem Zwischenhalt in die Parklücke zu führen.

Gemäß einer bevorzugten Weiterbildung ist weiterhin ein Schritt des Ausgebens von Fahrhinweisen an den Fahrzeugführer zum Führen des Fahrzeugs entlang der ersten bzw. zweiten Bahnkurve in die Parklücke vorgesehen. Dies unterstützt den Fahrer auf einfache Weise beim Einparken.

Gemäß einer bevorzugten Weiterbildung umfasst das Verfahren weiterhin einen Schritt des Ansteuerns einer Lenkung, eines Antriebs und/oder einer Bremse des Fahrzeugs derart, dass das Fahrzeug entlang der ersten bzw. zweiten Bahnkurve in die Parklücke geführt wird. Somit wird sichergestellt, dass das Fahrzeug zumindest teilweise unabhängig von den Fähigkeiten des Fahrers sicherer in die Parklücke geführt wird.

### Kurze Beschreibung der Zeichnungen

Die vorliegende Erfindung wird nachfolgend anhand bevorzugter Ausführungsformen und beigefügter Figuren erläutert. In den Figuren zeigen:
- Fig. 1: eine schematische Aufsicht auf ein Fahrzeug mit einer Ausführungsform einer erfindungsgemäßen Vorrichtung zur Einparkunterstützung;
- Fig. 2: eine schematische Aufsicht auf eine erste Bahnkurve eines Fahrzeugs;
- Fig. 3: eine schematische Aufsicht auf eine zweite Bahnkurve eines einparkenden Fahrzeugs;
- Fig. 4: eine überlappende Vergleichsdarstellung zweier Bahnkurven;
- Fig. 5: eine schematische Aufsicht auf eine dritte Bahnkurve eines einparkenden Fahrzeugs, das gemäß einer Ausführungsform des erfindungsgemäßen Verfahrens einparkt; und
- Fig. 6: ein Ablaufdiagramm einer Ausführungsform eines erfindungsgemäßen Verfahrens zur Einparkunterstützung.

### Ausführungsformen der Erfindung

Die vorliegende Erfindung kann für beliebige Fahrzeuge verwendet werden, ist aber insbesondere vorteilhaft für Fahrzeuge, die sich frei in einem Straßenverkehrsnetz bewegen können. Aufgrund heute üblicher hoher Verkehrsdichte muss ein Fahrer sein Fahrzeug im Straßenverkehr sehr genau bewegen. Insbesondere ist es erforderlich, oftmals recht knappen Parkraum ausnutzen zu können, um ein Fahrzeug im Straßenverkehr abstellen zu können. Daher wird im Folgenden das erfindungsgemäße Steuergerät am Beispiel einer Verwendung in einem Kraftfahrzeug für einen Einparkvorgang erläutert.

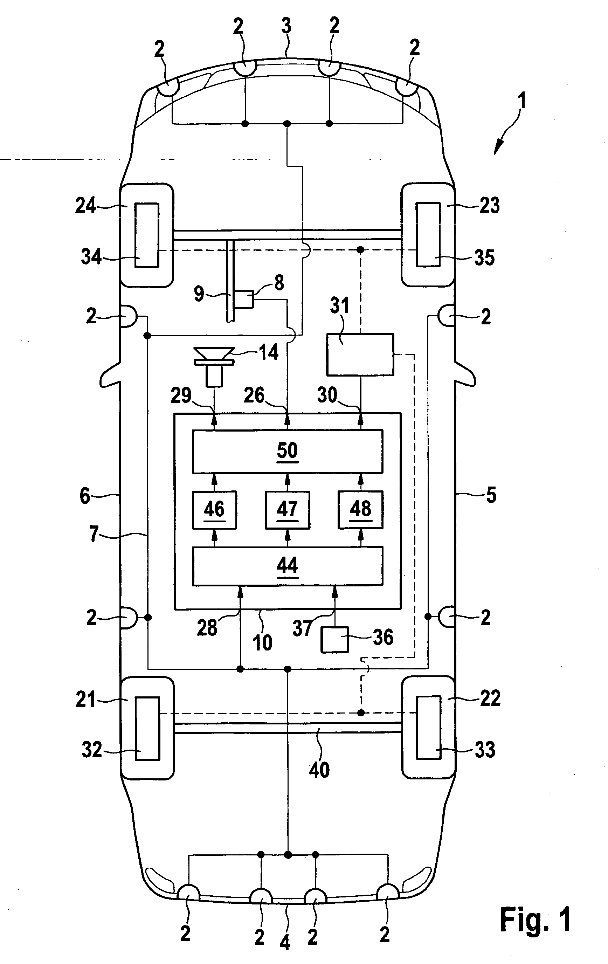

Figur 1 zeigt ein Kraftfahrzeug 1, das schematisch in einer Aufsicht dargestellt ist. Das Kraftfahrzeug verfügt über Abstandssensoren 2 zur Ermittlung von Umgebungsdaten. In der hier gezeigten Konfiguration sind vier Abstandssensoren 2 an einer Vorderseite 3 des Fahrzeugs und vier Abstandssensoren 2 an einer Rückseite 4 des Fahrzeugs angeordnet. Ferner sind an einer rechten Seite 5 des Fahrzeugs und an einer linken Seite 6 des Fahrzeugs jeweils zwei Abstandssensoren angeordnet. Die Abstandssensoren 2 können z.B. als Ultraschallsensoren, optische Sensoren oder Radarsensoren ausgeführt sein. Die Abstandssensoren 2 sind mit einem Steuergerät 10 über einen Datenbus 7 verbunden, der über eine Datenschnittstelle 28 an das Steuergerät 10 angeschlossen ist.

Das Steuergerät 10 verfügt über eine Beurteilungseinheit 44, die eine Auswertung der Umgebungsdaten vornimmt. Die Beurteilungseinheit ist vom Fahrer durch ein über eine Datenschnittstelle 37 angeschlossenes Bedienelement 36 aktivierbar und ausgelegt, um aus den gemessenen Umgebungsdaten eine Hinderniskarte der Umgebung des Fahrzeugs 1 zu bestimmen. So ist es beispielsweise möglich, mit den an der rechten Seite 5 des Fahrzeugs 1 angeordneten Abstandssensoren 2 die Länge einer Parklücke zu vermessen sowie die Position der die Parklücke begrenzenden Hindernisse zu bestimmen. Die Beurteilungseinheit 44 ist weiterhin dazu ausgelegt, gestützt auf die aus den Umgebungsdaten ermittelte Hinderniskarte und z.B. in der Beurteitungseinheit 44 gespeicherten Fahrzeugdaten wie die den Außenmaßen, der Position einer Hinterachse 40 im Fahrzeug 1, dem minimalen Wendekreisradius usw. des Fahrzeugs zu beurteilen, ob das Fahrzeug, ausgehend von seiner gegenwärtigen Position relativ zur Parklücke ohne Zwischenhalt in die Parklücke einparken kann, und falls dies nicht möglich ist, ob es mit nicht mehr als einem Zwischenhalt zum Umlenken im Stand in die Parklücke einparken kann.

Das Steuergerät 10 verfügt weiterhin über einen ersten 46, zweiten 47 und dritten 48 Bahnkurvenermittler, die mit der Beurteilungseinheit 42 verbunden sind und im Betrieb von dieser angesteuert werden. Der erste Bahnkurvenermittler 46 ist dabei ausgelegt, eine erste Bahnkurve zur Bewegung des Fahrzeugs ohne Zwischenhalt in die Parklücke zu ermitteln, wenn die Beurteilungseinheit beurteilt hat, dass das Kraftfahrzeug ohne Zwischenhalt in die Parklücke einparken kann. Der zweite Bahnkurvenermittler 47 ist dazu ausgelegt, eine zweite Bahnkurve zur Bewegung des Kraftfahrzeugs mit einem Zwischenhalt zum Umlenken im Stand in die Parklücke zu ermitteln, wenn die Beurteilungseinheit beurteilt hat, dass das Kraftfahrzeug zwar nicht ohne Zwischenhalt in die Parklücke einparken kann, ein Einparken mit genau einem Zwischenhalt, bei dem im Stand umgelenkt wird, jedoch möglich ist. Der dritte Bahnkurvenermittler 48 ist dazu ausgelegt, eine dritte Bahnkurve zur Bewegung des Kraftfahrzeugs mit zwei Zwischenhalten zum Umlenken im Stand in die Parklücke zu ermitteln, wenn die Beurteilungseinheit beurteilt hat, dass das Kraftfahrzeug zwar nicht mit maximal einem Zwischenhalt in die Parklücke einparken kann, ein Einparken mit zwei Zwischenhalten, bei denen im Stand umgelenkt wird, jedoch möglich ist.

Das Steuergerät 10 weist ferner eine Unterstützungseinheit 50 auf, die mit jedem der drei Bahnkurvenermittler 46-48 verbunden und ausgelegt ist, über eine optische, haptische und/oder akustische Ausgabeeinheit 14 dem Fahrer Anweisungen zu geben, um das Fahrzeug 1 gemäß der jeweiligen, von einem der Bahnkurvenermittler 46, 47, 48 ermittelten Bahnkurve in die Parklücke zu lenken. Die Ausgabeeinheit 14 ist über eine Datenschnittstelle 29 an das Steuergerät 10 angeschlossen. Die ausgegebenen Fahranweisungen können ein Vor- bzw. Rückwärtsfahren oder Abbremsen des Fahrzeugs, aber auch Lenkanweisungen beinhalten.

Ferner weist das Steuergerät 10 eine Datenschnittstelle 30 auf, die mit einer Ansteuervorrichtung 31 zur Steuerung eines Bremssystems des Fahrzeugs verbunden ist. Die Ansteuerungsvorrichtung des Bremssystems kann dabei über einen gestrichelt eingezeichneten Datenbus mit Bremseinrichtungen 32, 33 der Hinterräder 21, 22 und/oder mit Bremseinrichtungen 34, 35 der Vorderräder 23, 24 zusammenwirken. Eine weitere Datenschnittstelle 26 des Steuergeräts ist mit einem Lenksteller 8 zur Steuerung einer Lenkung 9 des Fahrzeugs verbunden. Die Unterstützungseinheit 50 ist dazu ausgelegt, während des Einparkvorgangs Lenkung 9 und/oder Bremsen 32-35 so anzusteuern, dass der Fahrer dabei unterstützt wird, das Fahrzeug 1 gemäß der jeweiligen, von einem der Bahnkurvenermittler 46, 47, 48 ermittelten Bahnkurve in die Parklücke zu bewegen. In alternativen Ausführungsformen kann die Ausführungseinheit 50 z.B. mit einer weiteren Datenschnittstelle verbunden sein, um einen Antrieb des Kraftfahrzeugs anzusteuern, oder z.B. ausgelegt sein, den Einparkvorgang entlang der ermittelten Bahnkurve lediglich durch Fahranweisungen über die Ausgabeeinheit 14 ohne direkte Eingriffe in die Lenkung 9, das Bremssystem 32-35 oder den Fahrzeugantrieb zu unterstützen.

Die Datenschnittstellen 26, 28, 29, 30, 37 können jeweils als einzelne Datenschnittstellen an dem Steuergerät 10 angeordnet sein. In einer weiteren Ausführungsform ist es jedoch auch möglich, bestimmte Datenschnittstellen über einen Datenbus zusammenzufassen. So ist es beispielsweise möglich, die Ansteuerungssignale an die Bremseinrichtung einerseits sowie die Sensordaten andererseits über einen so genannten CAN-Bus (Controller Area Network) an das Steuergerät 10 zu übertragen. Die Abfrage des Bedienelements 36 und die Ausgabe von Informationen an die Ausgabeeinrichtungen 13, 14 können beispielsweise über einen LIN-Bus erfolgen. Die Sensoren 2 können über einen geeigneten Sensordatenbus an das Steuergerät 10 Daten übermitteln. Das Steuergerät weist bevorzugt geeignete Steckkontakte jeweils mit entsprechender Eingangsbeschaltung auf, die die Datenschnittstellen bilden.

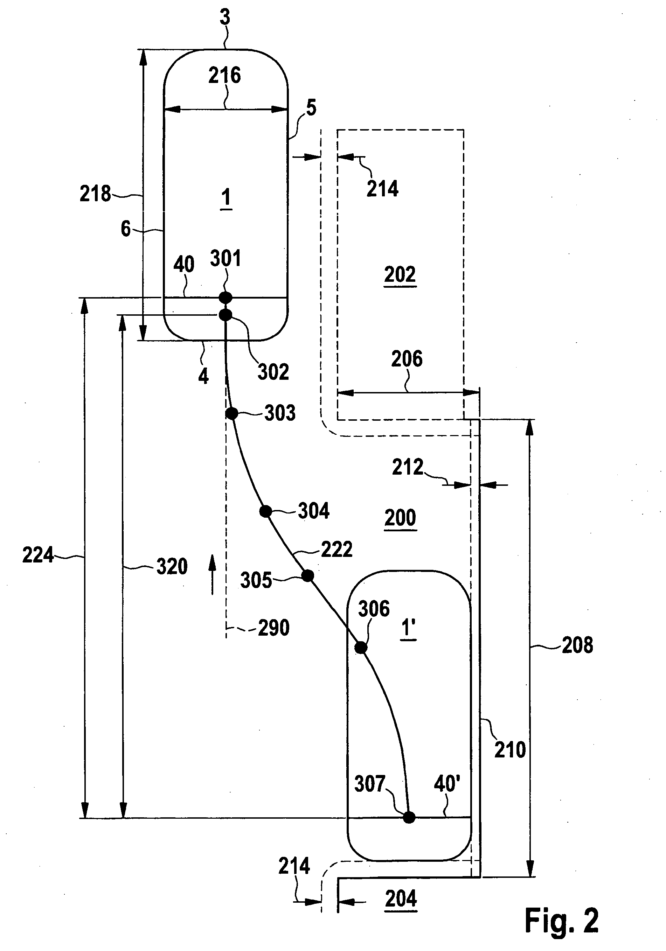

Die Funktionsweise einer Vorrichtung zur Einparkunterstützung wie der in Fig. 1 dargestellten Steuergerät 10 wird im Folgenden anhand eines in Fig. 2 gezeigten Fahrbeispiels erläutert. Das Kraftfahrzeug 1 ist in dieser Darstellung in zwei mit unterschiedlichen Bezugszeichen 1 bzw. 1' gekennzeichneten Positionen gezeigt, die es während des Einparkvorgangs zeitlich nacheinander einnimmt.

Das Fahrzeug 1 ist entlang seiner Fahrstrecke 290 in Pfeilrichtung entlang eines Straßenrandes 210 gefahren und hat in der mit dem Bezugszeichen 1 bezeichneten Position angehalten, um in eine Parklücke 200 einzuparken, die sich zwischen einem ersten Fahrzeug 204 und einem zweiten Fahrzeug 202 befindet, die am Straßenrand 210 geparkt sind. Der Fahrer aktiviert nun die Vorrichtung zur Einparkunterstützung, die mit Hilfe von durch Abstandssensoren ermittelten Umgebungsdaten die Länge 208 und Breite 206 der Parklücke 200 sowie die relative Position des Kraftfahrzeugs 1 zur Parklücke 200 ermittelt. Dabei kann zweckmäßig z.B. durch Vergleich mit der im Steuergerät gespeicherten Länge 218 und Breite 216 eine Überprüfung durchgeführt werden, ob die Parklücke 200 ausreichend groß für das Kraftfahrzeug 1 ist.

Die Beurteilungseinheit der Vorrichtung beurteilt nun, ob es möglich ist, das Fahrzeug 1 ohne Zwischenhalt in die Parklücke 200 zu bewegen. Hierzu berechnet sie zunächst eine Zielposition 1' des Fahrzeugs 1, in welcher sich das Fahrzeug 1 innerhalb der Parklücke 200 an deren rückwärtigem, d.h. von der mit dem Bezugszeichen 1 bezeichneten Ausgangsposition des Fahrzeugs 1 am weitesten entfernten Ende befinden soll. In dieser Zielposition 1' ist das Kraftfahrzeug 1 parallel zum Straßenrand 210 ausgerichtet, von dem es um einen Straßenrandabstand 212 entfernt ist, während zum ersten Fahrzeug 204, das die rückwärtige Begrenzung der Parklücke bildet, ein Sicherheitsabstand 214 eingehalten ist. Sodann ermittelt die Beurteilungseinheit eine Ausgangsdistanz 224 von der Ausgangsposition des Kraftfahrzeugs 1 bis zu seiner Zielposition 1' in der Parklücke. In der beispielhaften Darstellung von Fig. 2 ist dies die longitudinale, d.h. parallel zum Straßenrand 210 gemessene, Distanz zwischen der Position der Hinterachse 40 des Kraftfahrzeugs 1 in der Ausgangsposition und der entsprechenden Position 40', welche die Hinterachse 40 des Kraftfahrzeugs 1 in dessen Zielposition 1' einnehmen soll. Diese Distanz kann z.B. auch als longitudinale Distanz der Rückseite 4 des Kraftfahrzeugs 1 zum die Parklücke begrenzenden Ende des ersten Fahrzeugs 204 bestimmt werden, wobei der Sicherheitsabstand 214 zu subtrahieren ist.

Die Beurteilungseinheit vergleicht nun die Ausgangsdistanz 224 mit einem ersten Schwellwert 320, der einen Mindestbetrag darstellt, den die Ausgangsdistanz 224 aufweisen muss, damit eine Bahnkurve konstruierbar ist, entlang derer das Kraftfahrzeug 1 ohne Zwischenhalt in die Parklücke 200 bewegt werden kann. Der erste Schwellwert 320 kann im einfachsten Fall als Fahrzeugkonstante in der Vorrichtung abgespeichert sein, aber auch dynamisch berechnet werden, z.B. unter Berücksichtigung der seitlichen Distanz und/oder des Winkels zum Straßenrand 210, den das Kraftfahrzeug 1 in der Ausgangsposition aufweist. In der Darstellung von Fig. 2 übersteigt die Ausgangsdistanz 224 den ersten Schwellwert 320, sodass die Beurteilungseinheit urteilt, dass das Kraftfahrzeug 1 ohne Zwischenhalt in die Parklücke 200 bewegt werden kann. Die Beurteilungseinheit weist daher den ersten Bahnkurvenermittler an, eine in Fig. 2 gezeigte erste Bahnkurve 222 zu ermitteln, entlang derer das Kraftfahrzeug 1 ohne Zwischenhalt in die Zielposition 1' bewegbar ist.

Die beispielhaft gezeigte erste Bahnkurve 222 umfasst ein Geradensegment 301/302 parallel zum Straßenrand 210, ein erstes Klothoidensegment 302/303, in welchem die Krümmung der Bahnkurve 222 von Null bis auf die bei maximalem Lenkeinschlag mögliche Bahnkrümmung nach rechts linear mit der Streckenlänge ansteigt, ein Kreisbogensegment 303/304, in welchem die erreichte Krümmung beibehalten wird, ein zweites Klothoidensegment 304/305, in welchem die Krümmung wieder auf Null zurückgeführt wird, ein drittes Klothoidensegment 305/306, in welchem die Krümmung der Bahnkurve 222 von Null bis auf die bei maximalem Lenkeinschlag mögliche Bahnkrümmung nach links linear mit der Streckenlänge ansteigt, und ein Kreisbogensegment 306/307, in welchem die erreichte Krümmung beibehalten wird. Hierbei ist als Randbedingung angenommen, dass der Grad der Veränderung der Krümmung mit der Streckenlänge innerhalb der Klothoidensegmente 302/303, 304/305, 305/306 so gewählt wurde, dass beim Bewegen des Fahrzeugs entlang der ersten Bahnkurve 222 der Lenkruck und die Drehgeschwindigkeit des Steuerrads in der Fahrzeugkabine bei einem den Komfort für die Fahrzeuginsassen noch nicht beeinträchtigenden, maximal gewünschten Wert liegt.

In abweichenden Einparksituationen, wenn das Fahrzeug 1 in einer parallel zum Straßenrand weiter nach vorn oder weiter zurück liegenden Ausgangsstellung gehalten hat, ist eine die genannten Randbedingungen maximalen Lenkeinschlags und maximaler Lenkeinschlagänderung erfüllende Bahnkurve ohne Zwischenhalt durch Verlängern bzw. Verkürzen des Geradensegments 301/302 der gezeigten ersten Bahnkurve 222 bis hin zu seiner vollständigen Entfernung ebenfalls konstruierbar, sofern die Ausgangsdistanz 224 größer oder gleich dem ersten Schwellwert 320 ist.

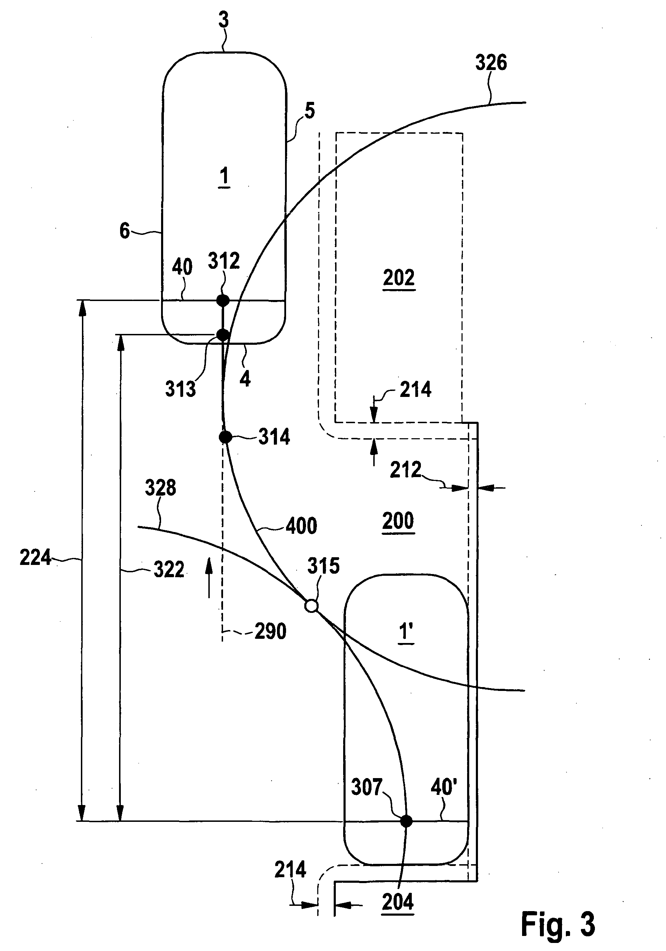

Eine Einparksituation, in der die Ausgangsdistanz 224 den ersten Schwellwert 320 unterschreitet, ist in Fig. 3 dargestellt. In einer derartigen Situation beurteilt die Beurteilungseinheit, dass das Kraftfahrzeug 1 entlang einer zweiten Bahnkurve 400, die einen Zwischenhalt 315 aufweist, in die Parklücke 200 bewegbar ist, wenn die Ausgangsdistanz 224 größer oder gleich einem entsprechenden zweiten Schwellwert 322 ist. Der zweite Schwellwert 322 kann wie der erste Schwellwert als Fahrzeugkonstante in der Vorrichtung abgespeichert sein, aber auch dynamisch berechnet werden. In der Darstellung von Fig. 3 übersteigt die Ausgangsdistanz 224 den zweiten Schwellwert 322, sodass die Beurteilungseinheit urteilt, dass das Kraftfahrzeug 1 mit einem Zwischenhalt in die Parklücke 200 bewegt werden kann. Die Beurteilungseinheit weist daher den zweiten Bahnkurvenermittler an, eine zweite Bahnkurve 400 zu ermitteln, entlang derer das Kraftfahrzeug 1 mit einem Zwischenhalt in die Zielposition 1' bewegbar ist.

Die beispielhaft gezeigte zweite Bahnkurve 400 umfasst ein Geradensegment 312/313 parallel zum Straßenrand 210, ein erstes Klothoidensegment 313/314, in welchem die Krümmung der Bahnkurve 400 von Null bis auf die bei maximalem Lenkeinschlag mögliche Bahnkrümmung nach rechts linear mit der Streckenlänge ansteigt, ein erstes Kreisbogensegment 314/315, in welchem die erreichte Krümmung beibehalten wird, einen Umlenkpunkt 315, an welchem sich die Krümmung sprungartig auf die einem maximalem Lenkeinschlag nach links entsprechende Bahnkrümmung ändert, und ein zweites Kreisbogensegment 315/307, in welchem diese Krümmung beibehalten wird. Nur zur Verdeutlichung der Konstruktion der Kreisbogensegmente 314/315, 315/307 sind größere Teile der jeweiligen Kreisbögen 326, 328 in dargestellt, die keinen Teil der zweiten Bahnkurve 400 bilden. Als Randbedingung ist angenommen, dass der Grad der Veränderung der Krümmung mit der Streckenlänge innerhalb des Klothoidensegments 313/314 so gewählt wurde, dass beim Bewegen des Fahrzeugs entlang der zweiten Bahnkurve 400 der Lenkruck und die Drehgeschwindigkeit des Steuerrads in der Fahrzeugkabine bei einem den Komfort für die Fahrzeuginsassen noch nicht beeinträchtigenden, maximal gewünschten Wert liegt.

Beim Einparken entlang der zweiten Bahnkurve 400 setzt das Kraftfahrzeug 1 aus seiner Ausgangsposition zurück bis zum Umlenkpunkt 315, an welchem es für einen Zwischenhalt abgebremst wird. Während des Zwischenhalts wird die Lenkung im Stand aus ihrer Stellung bei maximalem Lenkeinschlag nach links bis zum maximalen Lenkeinschlag nach rechts umgelenkt. Anschließend fährt das Kraftfahrzeug 1 weiter bis zum Endpunkt 307 in der Parklücke 200. Das Abbremsen, Umlenken und Wiederanfahren am Umlenkpunkt 315 kann jeweils sowohl automatisch erfolgen als auch vom Fahrer auf einen Fahrhinweis der Vorrichtung hin ausgeführt werden. Bei automatischem Umlenken im Stand erfolgt zweckmäßig das Drehen des Steuerrads so langsam, dass es die Fahrzeuginsassen nicht in ihrem Wohlbefinden beeinträchtigt.

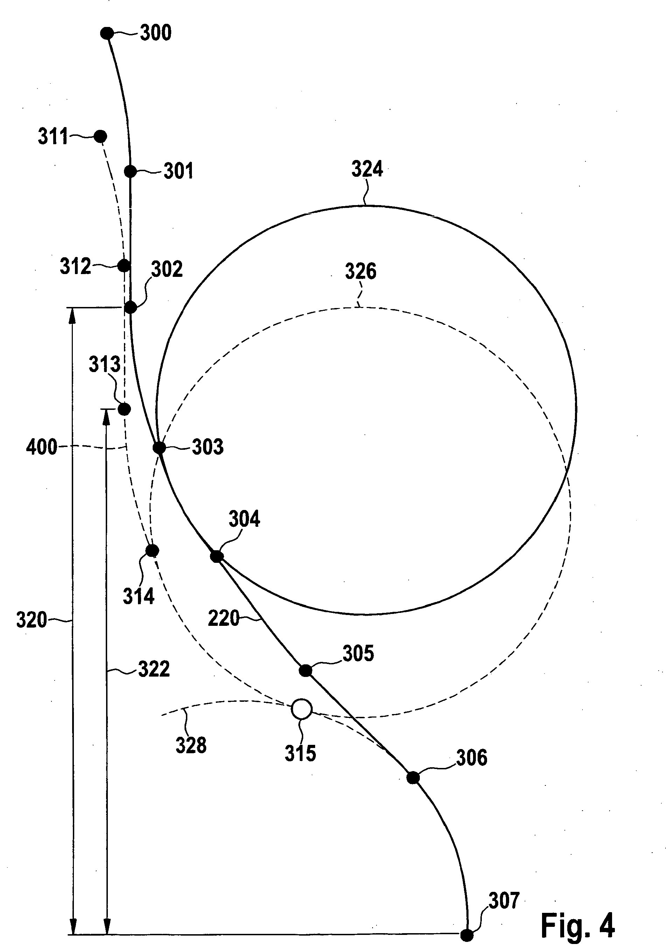

Figur 4 verdeutlicht die Unterschiede und Gemeinsamkeiten der ersten 220 und zweiten 400 Bahnkurve, die in ihrem Endpunkt 307 zusammenfallen, in einem gemeinsamen Diagramm. Beispielhaft wurde beiden Kurven zusätzlich mit jeweiligen Anfangsklothoidensegmenten 300/301 bzw. 311/312 versehen, entlang derer das Lenkrad zunächst in die Geradeausstellung gebracht wird. Während die erste Bahnkurve 220 zwischen dem ersten Kreisbogensegment 303/304, das auf einem nur zur Verdeutlichung dargestellten Kreis 324 mit dem maximal einstellbaren Krümmungsradius liegt, und dem zweiten Kreisbogensegment 306/307 das zweite 304/305 und dritte 305/306 Klothoidensegment aufweist, sind diese zwischen dem ersten 314/315 und dem zweiten 315/307 Kreisbogensegment der zweiten Bahnkurve durch den Umlenkpunkt 315 ersetzt. Daher weist die zweite Bahnkurve 400 eine geringere longitudinale Ausdehnung auf als die erste Bahnkurve 320, sodass entsprechend der zweite Schwellwert 322 kleiner als der erste Schwellwert 320 ist.

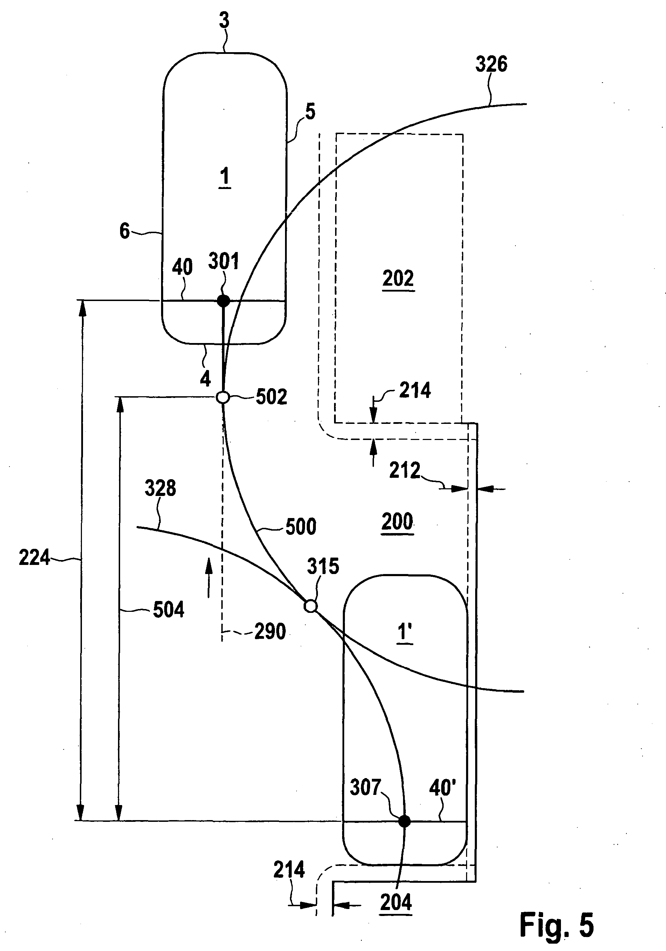

Eine Einparksituation, in der die Ausgangsdistanz 224 auch den zweiten Schwellwert 322 unterschreitet, ist in Fig. 5 dargestellt. In einer derartigen Situation beurteilt die Beurteilungseinheit, dass das Kraftfahrzeug 1 entlang einer dritten Bahnkurve 500, die zwei Zwischenhalte 502, 315 aufweist, in die Parklücke 200 bewegbar ist, wenn die Ausgangsdistanz 224 größer oder gleich einem entsprechenden dritten Schwellwert 504 ist. Der dritte Schwellwert 504 kann wie der erste und zweite Schwellwert als Fahrzeugkonstante in der Vorrichtung abgespeichert sein, aber auch dynamisch berechnet werden. In der Darstellung von Fig. 5 übersteigt die Ausgangsdistanz 224 den dritten Schwellwert 504, sodass die Beurteilungseinheit urteilt, dass das Kraftfahrzeug 1 mit zwei Zwischenhalten in die Parklücke 200 bewegt werden kann. Die Beurteilungseinheit weist daher den dritten Bahnkurvenermittler an, eine dritte Bahnkurve 500 zu ermitteln, entlang derer das Kraftfahrzeug 1 mit zwei Zwischenhalten in die Zielposition 1' bewegbar ist.

Die beispielhaft gezeigte dritte Bahnkurve 500 umfasst ein Geradensegment 301/502 parallel zum Straßenrand 210, einen ersten Umlenkpunkt 502, an welchem sich die Krümmung sprungartig auf die einem maximalem Lenkeinschlag nach rechts entsprechende Bahnkrümmung ändert, ein erstes Kreisbogensegment, in welchem diese Krümmung beibehalten wird, einen zweiten Umlenkpunkt 315, an welchem sich die Krümmung sprungartig auf die einem maximalem Lenkeinschlag nach links entsprechende Bahnkrümmung ändert, und ein zweites Kreisbogensegment 315/307, in welchem diese Krümmung beibehalten wird.

Beim Einparken entlang der dritten Bahnkurve 500 setzt das Kraftfahrzeug 1 aus seiner Ausgangsposition zurück bis zum ersten Umlenkpunkt 502, an welchem es für einen Zwischenhalt abgebremst wird. Während des Zwischenhalts wird die Lenkung im Stand aus ihrer Stellung bei maximalem Lenkeinschlag nach links bis zum maximalen Lenkeinschlag nach rechts umgelenkt. Anschließend fährt das Kraftfahrzeug 1 weiter bis zum zweiten Umlenkpunkt 315, bei welchem wiederum ein Zwischenhalt zum Umlenken im Stand ausgeführt wird. Vom zweiten Umlenkpunkt 315 fährt das Fahrzeug bis zum Endpunkt 307 in der Parklücke 200. Wie in Bezug auf Fig. 3 erläutert, kann das Abbremsen, Umlenken und Wiederanfahren an den Umlenkpunkten 502, 315 jeweils sowohl automatisch erfolgen als auch vom Fahrer auf einen Fahrhinweis der Vorrichtung hin ausgeführt werden.

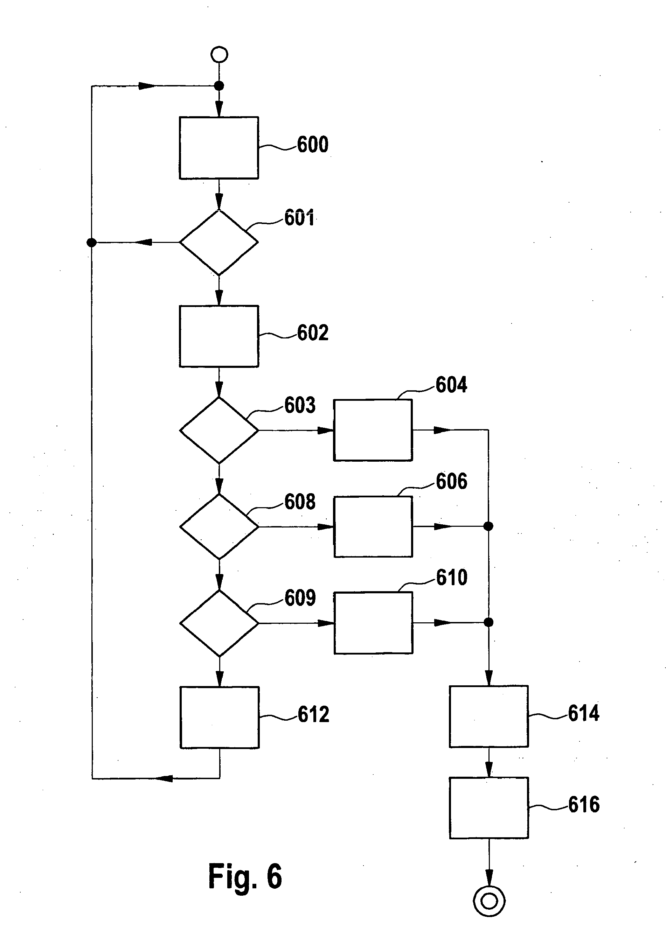

Figur 6 zeigt ein Ablaufdiagramm eines Verfahrens zur Unterstützung des Einparkens eines Kraftfahrzeugs mit einem Fahrerunterstützungssystem, bei dem zunächst in Schritt 600 Umgebungsdaten erfasst werden, z.B. durch Ultraschall- oder Radarsensoren. In Schritt 601 wird aufgrund der Umgebungsdaten ermittelt, ob sich das Fahrzeug in der Nähe einer genügend großen Parklücke befindet. Ist dies nicht der Fall, springt das Verfahren zurück nach Schritt 600.

Wird nach mehrfachem Erfassen von Umgebungsdaten in Schritt 600, z.B. während das Kraftfahrzeug an einer Reihe geparkter Fahrzeuge entlangfährt, in Schritt 601 festgestellt, das eine passende Parklücke vorliegt, wird, ggf. nachdem der Fahrer auf einen Hinweis des Fahrerunterstützungssystems hin das Kraftfahrzeug angehalten hat, in Schritt 602 eine Ausgangsdistanz des Kraftfahrzeugs von seiner gegenwärtigen Position zur Parklücke ermittelt.

In Schritt 603 wird die Ausgangsdistanz aus Schritt 602 mit einem vorgebbaren ersten Schwellwert verglichen, um festzustellen, ob das Kraftfahrzeug ohne Zwischenhalt in die Parklücke einparken kann. Ist dies der Fall, da die Ausgangsdistanz größer oder gleich dem ersten Schwellwert ist, verzweigt das Verfahren nach Schritt 604, in welchem eine erste Bahnkurve zur Bewegung des Fahrzeugs ohne Zwischenhalt in die Parklücke ermittelt wird. In Schritt 614 werden Fahrhinweise an den Fahrzeugführer ausgegeben, die ihn dabei unterstützen, das Kraftfahrzeug entlang der ermittelten Bahnkurve in die Parklücke zu führen. In Schritt 616 greift das Fahrerunterstützungssystem darüber hinaus aktiv in die Lenkung ein, sodass das Fahrzeug der ermittelten Bahnkurve präzise folgt und in die Parklücke gelangt.

Falls in Schritt 603 festgestellt wird, dass die Ausgangsdistanz aus Schritt 602 kleiner als der erste Schwellwert ist, wird die Ausgangsdistanz in Schritt 608 mit einem vorgebbaren zweiten Schwellwert verglichen, um festzustellen, ob das Kraftfahrzeug mit genau einem Zwischenhalt in die Parklücke einparken kann. Ist dies der Fall, da die Ausgangsdistanz größer oder gleich dem zweiten Schwellwert ist, verzweigt das Verfahren nach Schritt 606, in welchem eine zweite Bahnkurve zur Bewegung des Fahrzeugs mit einem Zwischenhalt in die Parklücke ermittelt wird. In Schritt 614 und 616 unterstützt das Fahrerunterstützungssystem den Fahrer, sodass dieser das Fahrzeug entlang der ermittelten zweiten Bahnkurve präzise mit einem Zwischenhalt in die Parklücke führen kann.

Falls in Schritt 608 festgestellt wird, dass die Ausgangsdistanz aus Schritt 602 kleiner als der zweite Schwellwert ist, wird die Ausgangsdistanz in Schritt 609 mit einem vorgebbaren dritten Schwellwert verglichen, um festzustellen, ob das Kraftfahrzeug mit mehreren Zwischenhalten in die Parklücke einparken kann. Ist dies der Fall, da die Ausgangsdistanz größer oder gleich dem dritten Schwellwert ist, verzweigt das Verfahren nach Schritt 610, in welchem eine dritte Bahnkurve zur Bewegung des Fahrzeugs mit zwei Zwischenhalten in die Parklücke ermittelt wird. In Schritt 614 und 616 unterstützt das Fahrerunterstützungssystem den Fahrer, sodass dieser das Fahrzeug entlang der ermittelten dritten Bahnkurve präzise mit zwei Zwischenhalten in die Parklücke führen kann.

Falls in Schritt 612 festgestellt wird, dass die Ausgangsdistanz aus Schritt 602 kleiner als der dritte Schwellwert ist, wird in Schritt 612 ein Hinweis an den Fahrer ausgegeben, das Fahrzeug weiter vorzufahren, um die Ausgangsdistanz soweit zu erhöhen, dass eine neue Ausgangsposition erreicht wird, aus der das Fahrzeug in die Parklücke einparken kann. Das Verfahren springt nach Schritt 600, wo erneut Umgebungsdaten ermittelt werden.

## Patentansprüche

1. Verfahren zur Einparkunterstützung eines Fahrzeugs (1), mit folgenden Schritten:
- Erfassen (600) von Umgebungsdaten des Fahrzeugs (1);
- Beurteilen (602-603), basierend auf den Umgebungsdaten, ob das Fahrzeug (1) ohne Zwischenhalt in eine Parklücke (200) einparken kann;
- Ermitteln (604) einer ersten Bahnkurve (222) zur Bewegung des Fahrzeugs (1) ohne Zwischenhalt in die Parklücke (200), wenn beurteilt wurde, dass das Fahrzeug (1) ohne Zwischenhalt in die Parklücke (200) einparken kann; und
- Ermitteln (606) einer zweiten Bahnkurve (400, 500) zur Bewegung des Fahrzeugs (1) mit mindestens einem Zwischenhalt (315, 502) ohne Fahrtrichtungswechsel in die Parklücke, wenn beurteilt wurde, dass das Fahrzeug (1) nicht ohne Zwischenhalt in die Parklücke (200) einparken kann,
wobei das Beurteilen (602-603) umfasst:
- Ermitteln (602) einer Ausgangsdistanz (224) des Kraftfahrzeugs zur Parklücke (200), basierend auf den Umgebungsdaten; und
- Vergleichen (603) der Ausgangsdistanz (224) mit einem ersten Schwellwert (320);
wobei beurteilt wird, dass das Fahrzeug (1) ohne Zwischenhalt in die Parklücke (200) einparken kann, wenn die Ausgangsdistanz (224) nicht kleiner als der erste Schwellwert (320) ist, und beurteilt wird, dass das Fahrzeug nicht ohne Zwischenhalt in die Parklücke (200) einparken kann, wenn die Ausgangsdistanz (224) kleiner als der erste Schwellwert (320) ist;
**gekennzeichnet durch**
- einen Schritt des Vergleichens (608) der Ausgangsdistanz (224) mit einem zweiten Schwellwert (322), wobei eine dritte Bahnkurve (500) mit mindestens zwei Zwischenhalten (315, 502) ermittelt wird, wenn die Ausgangsdistanz (224) kleiner als der zweite Schwellwert (322) ist.

2. Verfahren nach Anspruch 1, wobei die Umgebungsdaten mindestens eines von einer Abmessung (206, 208) der Parklücke (200), einer relativen Position des Fahrzeugs (1) zur Parklücke (200) und einer Umgebungsverkehrsdichte umfassen.

3. Verfahren nach einem der vorhergehenden Ansprüche, weiterhin umfassend einen Schritt des Ausgebens (614) von Fahrhinweisen an den Fahrzeugführer zum Führen des Fahrzeugs (1) entlang der ersten (222) bzw. zweiten (400, 500) Bahnkurve in die Parklücke (200).

4. Verfahren nach einem der vorhergehenden Ansprüche, weiterhin umfassend einen Schritt des Ansteuerns (616) mindestens eines von einer Lenkung (9), einem Antrieb und einer Bremse (32-35) des Fahrzeugs (1) derart, dass das Fahrzeug (1) entlang der ersten (222) bzw. zweiten Bahnkurve (400, 500) in die Parklücke (200) geführt wird.

5. Computerprogrammprodukt mit Programmanweisungen, die auf einem maschinenlesbaren Träger gespeichert sind, zur Durchführung des Verfahrens nach einem der vorhergehenden Ansprüche, wenn die Programmanweisungen auf einem Computer oder einem Steuergerät (10) ausgeführt werden.

6. Vorrichtung (10) zur Einparkunterstützung eines Fahrzeugs (1), mit:
- einer Datenschnittstelle (28) zur Erfassung von Umgebungsdaten des Fahrzeugs (1);
- einer Beurteilungseinheit (44) zur Beurteilung basierend auf den Umgebungsdaten, ob das Fahrzeug (1) ohne Zwischenhalt in eine Parklücke (200) einparken kann;
- einem ersten Bahnkurvenermittler (46), welcher ausgebildet ist, eine erste Bahnkurve (222) zur Bewegung des Fahrzeugs (1) ohne Zwischenhalt in die Parklücke (200) zu ermitteln, wenn die Beurteilungseinheit (44) beurteilt hat, dass das Kraftfahrzeug (1) ohne Zwischenhalt in die Parklücke (200) einparken kann; und
- einem zweiten Bahnkurvenermittler (47), welcher ausgebildet ist, eine zweite Bahnkurve (400, 500) zur Bewegung des Kraftfahrzeugs (1) mit mindestens einem Zwischenhalt (315, 502) ohne Fahrrichtungswechsel in die Parklücke (200) zu ermitteln, wenn die Beurteilungseinheit (44) beurteilt hat, dass das Kraftfahrzeug (1) nicht ohne Zwischenhalt in die Parklücke (200) einparken kann; **gekennzeichnet durch**
- einen dritten Bahnkurvenermittler (48), welcher ausgebildet ist, eine dritte Bahnkurve (500) zur Bewegung des Kraftfahrzeuges (1) mit mindestens zwei Zwischenhaltern (315, 502) ohne Fahrtrichtungswechsel in die Parklücke (200) zu ermitteln, wenn die Beurteilungseinheit (44) beurteilt hat, dass das Kraftahrzeug (1) nicht ohne zwei Zwischenhalte in die Parklücke (200) einparken kann;
- wobei die Beuteilungseinheit (44) eingerichtet ist zum
- Ermitteln (602) einer Ausgangsdistanz (224) des Kraftfahrzeugs zur Parklücke (200), basierend auf den Umgebungsdaten; und
- Vergleichen (603) der Ausgangsdistanz (224) mit einem ersten Schwellwert (320);
wobei beurteilt wird, dass das Fahrzeug (1) ohne Zwischenhalt in die Parklücke (200) einparken kann, wenn die Ausgangsdistanz (224) nicht kleiner als der erste Schwellwert (320) ist, und beurteilt wird, dass das Fahrzeug nicht ohne Zwischenhalt in die Parklücke (200) einparken kann, wenn die Ausgangsdistanz (224) kleiner als der erste Schwellwert (320) ist; und
Vergleichen (608) der Ausgangsdistanz (224) mit einem zweiten Schwellwert (322), wobei eine dritte Bahnkurve (500) mit mindestens zwei Zwischenhalten (315, 502) ermittelt wird, wenn die Ausgangsdistanz (224) kleiner als der zweite Schwellwert (322) ist.

7. Vorrichtung nach Anspruch 6, weiterhin umfassend eine Ausgabeschnittstelle (29) zur Ausgabe von Fahrhinweisen an einen Fahrzeugführer zum Führen des Fahrzeugs (1) entlang der vom ersten (46) bzw. zweiten (47) Bahnkurvenermittler ermittelten Bahnkurve (222; 400, 500) in die Parklücke (200).

8. Vorrichtung nach Anspruch 6 oder 7, weiterhin umfassend eine Steuerschnittstelle (26, 30) zur Ansteuerung mindestens eines von einer Lenkung (9), einem Antrieb und einer Bremse (32-35) des Fahrzeugs (1) derart, dass das Fahrzeug (1) entlang der vom ersten (46) bzw. zweiten (47) Bahnkurvenermittler ermittelten Bahnkurve (222; 400, 500) in die Parklücke (200) geführt wird.

## Claims

1. Method for providing assistance for parking a vehicle (1), comprising the following steps:
- acquiring (600) data on the surroundings of the vehicle (1);
- assessing (602-603), on the basis of the data on the surroundings, whether the vehicle (1) can park in a parking space (200) without an intermediate stop;
- determining (604) a first trajectory (222) for the movement of the vehicle (1) into the parking space (200) without an intermediate stop if it has been assessed that the vehicle (1) can park in the parking space (200) without an intermediate stop; and
- determining (606) a second trajectory (400, 500) for moving the vehicle (1) with at least one intermediate stop (315, 502) without changing the direction of travel into the parking space if it has been assessed that the vehicle (1) cannot park in the parking space (200) without an intermediate stop,
wherein the assessment (602-603) comprises:
- determining (602) an initial distance (224) of the motor vehicle from the parking space (200) on the basis of the data on the surroundings; and
- comparing (603) the initial distance (224) with a first threshold value (320);
wherein it is assessed that the vehicle (1) can park in the parking space (200) without an intermediate stop if the initial distance (224) is not shorter than the first threshold value (320) and it is assessed that the vehicle cannot park in the parking space (200) without an intermediate stop if the initial distance (224) is shorter than the first threshold value (320) ;
**characterized by**
- a step of comparing (608) the initial distance (224) with a second threshold value (322), wherein a third trajectory (500) with at least two intermediate stops (315, 502) is determined if the initial distance (224) is shorter than the second threshold value (322).

2. Method according to Claim 1, wherein the data on the surroundings comprise at least one of a dimension (206, 208) of the parking space (200), a relative position of the vehicle (1) with respect to the parking space (200) and a density of the surrounding traffic.

3. Method according to one of the preceding claims, also comprising a step of outputting (614) driving instructions to the vehicle driver to guide the vehicle (1) into the parking space (200) along the first trajectory (222) or second trajectory (400, 500).

4. Method according to one of the preceding claims, further comprising a step of actuating (616) at least one of a steering system (9), a drive and a brake system (32-35) of the vehicle (1) in such a way that the vehicle (1) is guided into the parking space (200) along the first trajectory (222) or second trajectory (400, 500).

5. Computer program product having program instructions which are stored on a machine-readable carrier, for carrying out the method according to one of the preceding claims if the program instructions are executed on a computer or a control unit (10).

6. Device (10) for providing assistance for parking a vehicle (1), comprising
- a data interface (28) for acquiring data on the surroundings of the vehicle (1);
- an assessment unit (44) for assessing, on the basis of the data on the surroundings, whether the vehicle (1) can park in a parking space (200) without an intermediate stop;
- a first trajectory determining device (46) which is designed to determine a first trajectory (222) for moving the vehicle (1) into the parking space (200) without an intermediate stop if the assessment unit (44) has assessed that the vehicle (1) can park in the parking space (200) without an intermediate stop; and
- a second trajectory determining device (47) which is designed to determine a second trajectory (400, 500) for moving the motor vehicle (1) into the parking space (200) with at least one intermediate stop (315, 502) without a change of driving direction if the assessment unit (44) has assessed that the motor vehicle (1) cannot park in the parking space (200) without an intermediate stop; **characterized by**
- a third trajectory determining device (48) which is designed to determine a third trajectory (500) for moving the motor vehicle (1) into the parking space (200) with at least two intermediate stops (315, 502) without a change of driving direction if the assessment unit (44) has assessed that the motor vehicle (1) cannot park in the parking space (200) without two intermediate stops;
- wherein the assessment unit (44) is configured to
- determine (602) an initial distance (224) of the motor vehicle from the parking space (200) on the basis of the data on the surroundings; and
- compare (603) the initial distance (224) with a first threshold value (320);
wherein it is assessed that the vehicle (1) can park in the parking space (200) without an intermediate stop if the initial distance (224) is not shorter than the first threshold value (320), and it is assessed that the vehicle cannot park in the parking space (200) without an intermediate stop if the initial distance (224) is shorter than the first threshold value (320); and
compare (608) the initial distance (224) with a second threshold value (322), wherein a third trajectory (500) with at least two intermediate stops (315, 502) is determined if the initial distance (224) is shorter than the second threshold value (322).

7. Device according to Claim 6, further comprising an output interface (29) for outputting driving instructions to a vehicle driver to guide the vehicle (1) into the parking space (200) along the trajectory (222; 400, 500) determined by the first trajectory determining device (46) or second trajectory determining deice (47).

8. Device according to Claim 6 or 7, further comprising a control interface (26, 30) for actuating at least one of a steering system (9), a drive and a brake system (32-35) of the vehicle (1) in such a way that the vehicle (1) is guided into the parking space (200) along the trajectory (222; 400, 500) determined by the first trajectory determining device (46) or the second trajectory determining device (47).

## Revendications

1. Procédé d'assistance aux manoeuvres de stationnement d'un véhicule (1), avec les étapes suivantes :
- détection (600) des données d'environnement du véhicule (1) ;
- évaluation (602-603), sur la base des données d'environnement, de si oui ou non le véhicule (1) peut être garé sans arrêt intermédiaire dans une place de stationnement (200) ;
- calcul (604) d'une première courbe de trajectoire (222) permettant de déplacer le véhicule (1) sans arrêt intermédiaire dans la place de stationnement (200) lorsque l'on évalue que le véhicule (1) peut être garé sans arrêt intermédiaire dans la place de stationnement (200) ; et
- calcul (606) d'une deuxième courbe de trajectoire (400, 500) permettant de déplacer le véhicule (1) dans la place de stationnement en effectuant au moins un arrêt intermédiaire (315, 502) sans inversion de direction de conduite lorsque l'on évalue que le véhicule (1) ne peut pas être garé sans arrêt intermédiaire dans la place de stationnement (200) ; l'évaluation (602-603) comprenant :
- le calcul (602) d'une distance de sortie (224) du véhicule automobile hors de la place de stationnement (200), sur la base des données d'environnement ; et
- la comparaison (603) de la distance de sortie (224) avec une première valeur seuil (320) ;
l'analyse permettant de déterminer que le véhicule (1) peut être garé sans arrêt intermédiaire dans la place de stationnement (200) lorsque la distance de sortie (224) n'est pas inférieure à la première valeur seuil (320) et l'analyse permettant de déterminer que le véhicule ne peut pas être garé sans arrêt intermédiaire dans la place de stationnement (200) lorsque la distance de sortie (224) est inférieure à la première valeur seuil (320) ;
**caractérisé par** :
- une étape de comparaison (608) de la distance de sortie (224) avec une deuxième valeur seuil (322), une troisième courbe de trajectoire (500) présentant au moins deux arrêts intermédiaires (315, 502) étant calculée lorsque la distance de sortie (224) est inférieure à la deuxième valeur seuil (322).

2. Procédé selon la revendication 1, les données d'environnement comprenant au moins une information parmi : une dimension (206, 208) de la place de stationnement (200) ; une position relative du véhicule (1) par rapport à la place de stationnement (200) et une densité du trafic alentour.

3. Procédé selon l'une quelconque des revendications précédentes, comprenant en outre une étape de communication (614) d'indications de conduite au conducteur du véhicule afin de lui permettre de guider le véhicule (1) dans la place de stationnement (200) le long de la première (222) et/ou de la deuxième (400, 500) courbe de trajectoire.

4. Procédé selon l'une quelconque des revendications précédentes, comprenant en outre une étape d'excitation (616) d'au moins un élément parmi : une direction (9), un entraînement et un frein (32-35) du véhicule (1) de façon à guider le véhicule (1) dans la place de stationnement (200) le long de la première (222) et/ou de la deuxième courbe de trajectoire (400, 500).

5. Produit de programme informatique doté d'indications programmées mémorisées sur un support lisible par une machine, en vue de mettre en oeuvre le procédé selon l'une quelconque des revendications précédentes lorsque les indications programmées sont exécutées sur un ordinateur ou un appareil de commande (10).

6. Dispositif (10) d'assistance aux manoeuvres de stationnement d'un véhicule (1), avec :
- une interface de données (28) servant à détecter les données d'environnement du véhicule (1) ;
- une unité d'évaluation (44) permettant d'évaluer, sur la base des données d'environnement, si oui ou non le véhicule (1) peut être garé sans arrêt intermédiaire dans une place de stationnement (200) ;
- un premier calculateur de courbe de trajectoire (46) conçu pour calculer une première courbe de trajectoire (222) permettant de déplacer le véhicule (1) sans arrêt intermédiaire dans la place de stationnement (200) lorsque l'unité d'évaluation (44) a évalué que le véhicule automobile (1) peut être garé sans arrêt intermédiaire dans la place de stationnement (200) ; et
- un deuxième calculateur de courbe de trajectoire (47) conçu pour calculer une deuxième courbe de trajectoire (400, 500) permettant de déplacer le véhicule automobile (1) dans la place de stationnement (200) en effectuant au moins un arrêt intermédiaire (315, 502) sans inversion de direction de conduite lorsque l'unité d'évaluation (44) a évalué que le véhicule automobile (1) ne pouvait pas être garé sans arrêt intermédiaire dans la place de stationnement (200) ;
**caractérisé par** la présence d'un troisième calculateur de courbe de trajectoire (48) conçu pour calculer une troisième courbe de trajectoire (500) permettant de déplacer le véhicule automobile (1) dans la place de stationnement (200) avec au moins deux arrêts intermédiaires (315, 502) sans inversion de direction de conduite lorsque l'unité d'évaluation (44) a évalué que le véhicule automobile (1) ne peut pas être garé dans la place de stationnement (200) sans réaliser deux arrêts intermédiaires ;
- l'unité d'évaluation (44) étant conçue pour :
- calculer (602) une distance de sortie (224) du véhicule automobile hors de la place de stationnement (200) sur la base des données d'environnement ; et
- comparer (603) la distance de sortie (224) avec une première valeur seuil (320) ;
- l'évaluation permettant de déterminer que le véhicule (1) peut être garé sans arrêt intermédiaire dans la place de stationnement (200) lorsque la distance de sortie (224) n'est pas inférieure à la première valeur seuil (320) et de déterminer que le véhicule ne peut pas être garé sans arrêt intermédiaire dans la place de stationnement (200) lorsque la distance de sortie (224) est inférieure à la première valeur seuil (320) ; et
- comparer (608) la distance de sortie (224) avec une deuxième valeur seuil (322), une troisième courbe de trajectoire (500) présentant au moins deux arrêts intermédiaires (315, 502) étant calculée lorsque la distance de sortie (224) est inférieure à la deuxième valeur seuil (322).

7. Dispositif selon la revendication 6, comprenant en outre une interface de communication (29) permettant de communiquer des indications de conduite à un conducteur du véhicule afin de lui permettre de guider le véhicule (1) dans la place de stationnement (200) le long de la courbe de trajectoire (222 ; 400, 500) calculée par le premier (46) et/ou le deuxième (47) calculateur de courbe.

8. Dispositif selon la revendication 6 ou 7, comprenant en outre une interface de commande (26, 30) servant à exciter au moins un élément parmi une direction (9), un entraînement et un frein (32-35) du véhicule (1) de façon à guider le véhicule (1) dans la place de stationnement (200) le long de la courbe de trajectoire (222 ; 400, 500) calculée par le premier (46) et/ou le deuxième (47) calculateur de courbe de trajectoire.
